# EUROPEAN PATENT SPECIFICATION

(11) **EP 2 459 669 B1**
(45) Date of publication and mention of the grant of the patent: **22.11.2017**
(21) Application number: 10742640.5
(22) Date of filing: 29.07.2010
(51) Int. Cl.: C09K 5/06, F28D 20/02

(54) **THERMAL INSULATION UNIT**
WÄRMEDÄMMEINHEIT
UNITÉ D'ISOLATION THERMIQUE

(30) Priority: 30.07.2009 US 229800 P
(43) Date of publication of application: 06.06.2012
(73) Proprietor: E. I. du Pont de Nemours and Company, Wilmington, DE 19898 (US)
(72) Inventor: ROLLAND, Loic Pierre, 01220 Divonne les Bains (FR); ANDRE, Jacques, 74380 Lucinges (FR)
(74) Representative: Dannenberger, Oliver Andre
(86) International application number: PCT/US2010/043684
(87) International publication number: WO 2011/014636

(56) References cited:
- EP-A1- 0 412 021
- WO-A1-03/086269
- FR-A1- 2 830 077
- US-A- 4 488 924
- US-A- 5 630 961
- US-A1- 2006 099 361
- US-A1- 2007 100 076
- US-A1- 2009 229 593
- "Surlyn® Grade Comparison Chart" DuPont Packaging 9 August 2005 (2005-08-09), XP002605773 Retrieved from the Internet: URL:http://www2.dupont.com/Surlyn/en_US/as sets/downloads/surlyn_packaging_grades_cha rt.pdf [retrieved on 2010-10-19]
- "Surlyn® Properties and Performance Overview" DuPont Packaging 9 August 2005 (2005-08-09), XP002605774 Retrieved from the Internet: URL:http://www2.dupont.com/Surlyn/en_US/as sets/downloads/surlyn_packaging_properties _overview.pdf [retrieved on 2010-10-19]

## Description

The invention relates to thermal insulation units comprising phase change materials.

### BACKGROUND OF THE INVENTION

There is a general desire in all technical fields to be energy efficient. In the building industry, for example, there is a permanent need to decrease the energy costs related to heating and cooling indoor rooms. The same applies also to the textile industry, for instance, for protective clothing, and sportswear, where it is often necessary to conduct excess heat away from a person's body in order to increase the overall comfort.

Phase change materials (PCMs) are latent thermal storage materials that are capable of absorbing and releasing high amounts of latent heat during melting and crystallization, respectively. The thermal energy transfer occurs when a material is transformed from a solid to a liquid phase or from a liquid to a solid phase. During such phase changes, the temperature of the PCM material remains nearly constant as does the space surrounding the PCM material, the heat flowing through the PCM being "entrapped" within the PCM itself. Among other well-known PCMs, paraffin is frequently used as PCM because of its low cost and low toxicity.

US 5630961 discloses a thermal storage composition activated by exposure to microwave energy. The thermal storage composition preferably comprises a mixture of at least two impregnated powders where a first powder is calcium silicate impregnated with a microwave-sensitive material, and a second powder is calcium silicate impregnated with a phase-change material to provide a free-flowing powder.

US 2006099361 discloses a method for producing elements from or comprising a PCM which are provided with a cover. PCM is supplied continuously or in a clocked manner, is covered with a tube and the PCM-filled tube is subdivided into tube sections or stored.

EP 0412021 discloses a latent thermal energy storage material comprising a paraffin serving as a storage component, and a binder component comprising a hydrocarbon organic high polymer in an amount of 5 to 30 parts by weight per 100 parts by weight of the paraffin, the paraffin and the binder component being mixed together by mechanical means.

FR 2830077 discloses a thermal regulator comprising a PCM based on paraffin wax enclosed in an envelope comprising a flexible polyester polyurethane film layer.

WO 03/086269 discloses containers made of plastic material for transporting and storing goods at a constant temperature. Said containers comprise at least one hollow chamber for receiving a PCM which stores heat and which is based on paraffin. In order to be able to use paraffins in a non-immobilized form as a phase change material which stores heat without endangering the goods which are to be transported, the containers are provided with fluorised surface-blocking layers and the paraffins are received in a diffusion-tight manner in the at least one hollow chamber.

US 4488924 discloses a heat sealable film laminate having a first layer of a major amount of a high density polyolefin, a minor proportion of an adhesion promoting ionomer and a heat seal promoting proportion of a metal salt of a fatty acid; and a second layer adhering to the first layer, said layer comprising a polyamide.

PCMs can be introduced into matrices composed of different materials or they can be applied to coatings. See, e.g., US4003426, US4528328, US5053446, US20060124892 (WO2006/062610), WO98/04644, and WO2004/044345.

PCM can be incorporated into construction materials such as gypsum wallboards and other aggregate construction panels (see, .e.g, US4797160, US4988543, US5349798, and WO96/039473). When used in modern building applications, PCM-containing panels can also be incorporated into the panels or walls together with more traditional building materials, such as, for example, mineral wool, foamed styrene, gypsum boards, and bricks. When PCM-containing panels are utilized within walls, an insulating layer comprising, for example, mineral wool or expanded polystyrene can be placed on the external side of the PCM-containing panels. This insulating layer thermally isolates the PCM-containing panels and diminishes the quantity of heat the panels absorb, thereby improving the overall thermal performance of the insulated wall.

In building applications, PCMs may perform well in small containers, usually divided into cells. See, e.g., US6412545 and US6482332. The cells are shallow to reduce static head - based on the principle of shallow container geometry. PCM in containers of different sizes can be mounted inside the walls. However, after absorbing enough heat to undergo phase transition, the PCMs liquefy and flow to the bottom of the containers. After the temperature decreases, they solidify and remain in the altered position. This leads to an inhomogeneous distribution of PCM in the container itself that results in a decrease in insulation performance.

Solutions to this problem that have been proposed include employing a polymer matrix that absorbs and binds the PCM, even in its liquid state. For example, WO2006/062610 discloses blends of polymer matrix and PCM which retain their shape even above the melting point of the PCM itself. Such blends are processed into thermal insulation panels, for example, by sandwiching them between metal foil layers whereby the exposed flanges of the panels are covered with adhesive tape.

Despite good retention of the PCM material within the polymer matrix and a good degree of tightness of the panel itself, some leakage may nevertheless occur through unwanted creases that are formed by folding the adhesive metal tape around the flanges of the panel. The leakage leads to a decrease in the amount of PCM material in the thermal insulation panels and therefore negatively affects their performance. Furthermore, the released PCM can permeate into adjacent porous building material such as drywall or gypsum boards and causes irremovable stains which may become visible on the exterior of the building walls. This problem is exacerbated when the shapes of the PCM panels become more complex, such as for example polygons and circular shapes, because the number of potential leakage sites increases with increasing number of flanges.

In order to simplify production routine, it is desirable to provide a sealing solution that is unaffected by the aforementioned formation of unwanted creases.

The metal sheets used as barrier layers are easily punctured because their thickness is in the range of 100 µm. Increasing the thickness of the metal sheet results in an undesirable augmentation of rigidity, weight, and cost.

It would be desirable to provide a PCM-containing article overcoming the problems mentioned above.

### SUMMARY OF THE INVENTION

The invention relates to an article comprising a container and a phase change material as defined by claim 1. The container comprises, consists essentially of, consists of, or is produced from, a film or sheet wherein the container includes a pouch or a bag; the film or sheet includes a multilayer structure; the film or sheet comprises, consists essentially of, consists of, or is produced from, at least one barrier layer and at least one sealant layer; and the film or sheet can have barrier properties to PCM.

In another aspect, the invention relates to a thermal insulation unit comprising at least one insulation layer and at least one article as defined by claim 5.

A container comprises at least one phase change material in the container, which can be the same as that disclosed above.

A thermal insulation unit comprises, consists essentially of, consists of, or is produced from, at least one thermal insulation layer and at least one container wherein the insulation layer or a portion thereof can be in close proximity with one or more containers and the container has contained therein at least one phase change material.

A panel comprises, consists essentially of, consists of, or is produced from the above-described insulation unit.

### DETAILED DESCRIPTION

Trademarks are shown in capital letters.

The term "produced from" is an open-ended term indicating that it does not exclude any elements that are not disclosed or recited. For
example, when a multilayer structure is produced from a sealant layer and a barrier layer, the structure may comprise additional layer(s).

A container can include a bag or pouch having a size that can be fixed in placed inside a construction panel or wall material as discussed above in the Background. For example, a container can have an area of
1 to 500, 2 to 200, 3 to 100, 4 to 50, or 5 to 10 cm² or any other convenient size that fits within the construction panels.

The container can have any shape such as rectangular, square, round, and triangle.

The container or a portion of the container contains one or more PCMs that is/are paraffins. Such PCMs can be used in building applications, as they are non-toxic, readily available and have melting points within the temperature range used for human habitation. The crystallization of the aliphatic chain releases a large amount of the latent heat. Both the melting point and the heat of fusion increase with increasing chain length. Therefore, it is possible to select the paraffin, or mixtures thereof, in such a way that the phase change temperature (melting point) matches with the temperature range of the system in which they are applied.

The PCM can be blended with a polymer matrix as described in WO2006/062610 (or US20060124892).

The blend of PCM and polymer matrix can comprise, based on the total weight of the blend, 5 to 90, 10 to 90, or 20 to 80% of a PCM and the balance one or more polymers including polyethylene (e.g., very low density polyethylene or low density polyethylene), ethylene propylene rubber (such as ethylene propylene diene methylene or ethylene propylene methylene), styrenic copolymers (e.g., styrene ethylene butadiene styrene copolymer or styrene butadiene styrene copolymer), or combiations of two or more thereof. The polyethylene and ethylene propylene rubber may have any density known to one skilled in the art such as 0.88 to 0.92 g/cm³.

The matrix may be of low polarity and crystallinity.

The blend of PCM and polymer can be produced by any means known to one skilled in the art. For example, a blend of PCM and polymer matrix can be produced by soaking different component(s) all together at temperatures which are slightly above the melting point of the PCM but below the melting point of one or more polymers. Soaking is a natural absorption of the molten PCM by the polymer(s). The components can be mixed together in a tumble blender for a certain period of time such as 1 to 10 hours or about 8 hours.

The blend of PCM and polymer can also be produced by melt blend extrusion whereby the components are blended at temperatures above the melting point of both the one or more polymers and the PCM, the thus obtained mixture being subsequently extruded into granules or directly into sheets or any other suitable form.

The film or sheet comprises one or more barrier layers that have barrier properties to PCM which can prevent the permeation of PCM though the film or sheet.

The film or sheet may be substantially impermeable to a PCM and may have a permeability of less than 0.5 g per square meter per day (0.5g/m²/24 hr), less than 0.3g/m²124 hr, less than 0.25g/m²/24 hr, or less than 0.2g/m²/24 hr, to one or more PCMs.

The barrier layer includes
ethylene vinyl alcohol copolymers (EVOH), polyamides (nylons), polyester, polyvinylidene chloride, polycarbonate, or combinations of two or more thereof.

EVOH includes saponified or hydrolyzed ethylene/vinyl acetate copolymer having 27 to 44 mole % ethylene. EVOH can be produced by, e.g., hydrolysis of vinyl acetate copolymers. The degree of hydrolysis is preferably from 50 to 100 mole %, or 85 to 100 mole %. EVOH is available as EVAL® from Kuraray (EVALCA) and NOLTEX® from Nippon Goshei.

The polyamide includes polyamide 6, polyamide 9, polyamide 10, polyamide 11, polyamide 12, polyamide 6,6, polyamide 6,10, polyamide 6,12, polyamide 61, polyamide 6T, polyamide 6I 6T, polyamide MXD6 (i.e., polymetaxylene adipate homo- and/or co-polyamides), polyamide 6,9, a copolymer thereof, polyamides prepared from terephthalic acid and/or isophthalic acid and trimethylhexamethylenediamine; from adipic acid, azelaic acid, 2,2-bis-(p-aminocyclohexyl)propane; from adipic acid and *m*-xylene diamine; and from terephthalic acid and 4,4'-diaminocyclohexyl-methane, or combinations of two or more thereof including polyamide nanocomposites such as those available commercially as AEGIS from Honeywell or IMPERM from Mitsubishi Gas Chemicals/Nanocor.

Preferably, the polyamide is a polyamide 6,6, polyamide 6,12 or polyamide 6.

More preferably, the polyamide is a polyamide 6,6.

Polyamides may be made by any method known to one skilled in the art. The polyamide used may also be one or more of those referred to as "toughened nylons," which are often prepared by blending one or more polyamides with one or more polymeric or copolymer elastomeric toughening agents. See, e.g., US4174358, US4474927, US4732938, and US4755566. Because such methods are well known, the description of which is omitted herein for the interest of brevity.

Polyester is well known to one skilled in the art. It can include polyethylene terephthalate, polypropylene terephthalate, polybutylene terephthalate, polyethylene naphthalate, isophthalate-containing polyester, or combinations of two or more thereof. Because such methods are well known, the description of which is omitted herein for the interest of brevity.

The barrier layers may have a thickness in the range of 5 to 150 µm, 10 to 100 µm, 30 to 75 um, or 50 µm.

Barrier layers can also be metallized film such as oriented polypropylene or oriented polyethylene terephthalate, ethylene vinyl alcohol, aluminum foil, nylon or biaxial oriented nylon, blends or composites of the same as well as related copolymers thereof. Metallized film comprises a polymer film having its surface or portion thereof deposited with metal or metal powder.

The film or sheet includes a multilayer structure that comprises at least one sealant layer and at least one barrier layer.

The sealant layer can comprise or be a resin that can be bonded to itself (sealed) at temperatures lower than, or substantially below, the melting temperature of other layer(s) so that the other layer's appearance may not be affected by the sealing process and may not stick to the jaws of the sealing bar. Sealant layer used in multilayer container include copolymer of ethylene (meth)acrylic acid, ionomer derived from the copolymer of ethylene (meth)acrylic acid, or combinations thereof.

The ethylene acid copolymers can be direct acid copolymers such as those comprising repeat units derived from an α-olefin, such as ethylene, at least one monomer derived from a C₃₋₈ α,β-ethylenically unsaturated carboxylic acid, and optionally a softening monomer. Softening refers to the crystallinity being disrupted (the polymer is made less crystalline).

The C₃₋₈ α,β-ethylenically unsaturated carboxylic acid can be a (meth)acrylic acid (acrylic acid or methacrylic acid), maleic acid, fumaric acid, itaconic acid, or combinations of two or more thereof; fumaric acid monoester, itaconic acid monoester, maleic acid monoester, or combinations of two or more thereof where the ester is derived from C₁ to C₄ alcohols.

Softening comonomers can include alkyl acrylate, alkyl methacrylate, or combinations of two or more thereof wherein the alkyl group has from 1 to 8 or 1 to 4 carbon atoms.

The carboxylic acid can be present from 3 to 30, 4 to 25, or 5 to 20, wt % of the acid copolymer, and the softening comonomer, if present, can be from 0 to 35, 0.1 to 35, or 5 to 30, wt % of the acid copolymer.

Acid copolymers are well known to one skilled in the art such as NUCREL® available from E. I. du Pont de Nemours and Company, Wilmington, Delaware, USA (DuPont).

The acid copolymer can be treated with a basic compound to nominally neutralized to any level from 0 to 99%, 15 to 90%, 15 to 75%, 20 to 25%, or even 100% of the acid moieties of the acid copolymer by an alkaline earth metal cation, an alkali metal cation, or a transition metal cation. For example, an ionomer can be produced from an acid copolymer by partially or fully neutralized with metal ions such as Na, Zn, Mg, Li, or combinations of two or more thereof.

Preferably, the ionomer is partially or fully neutralized with zinc or sodium metal ions.

Preferably, the ionomer is partially or fully neutralized with sodium metal ions.

A sealant layer can have a thickness of 10 to 100 µm, 25 µm to 35 µm, or about 30 µm.

Ionomers and their methods of manufacture are disclosed in US3264272 and are commercially available as SURLYN® from DuPont.

The film or sheet may have a permeability of less than 5 g per square meter per day (5g/m²/24 hr), less than 2g/m²/24 hr, less than 1g/m²/24 hr, or less than 0.5g/m²/24 hr, to one or more PCMs.

The barrier layer includes ethylene vinyl alcohol copolymer, polyamide, polyester, polyvinylidene chloride, polycarbonate, or combinations of two or more thereof.

The barrier layer can be the same as that disclosed above.

The multilayer structure can also comprise at least one tie layer (adhesive layer), which is any interior layer having the primary purpose of adhering two layers to one another. Tie layers can comprise any polymer having a polar group thereon, or any other polymer that provides sufficient interlayer adhesion to adjacent layers comprising otherwise non-adhering polymers.

The tie layer may be any suitable polymer such as an ethylene copolymer comprises repeat units derived from ethylene and an alkyl (meth)acrylate or an ionomer disclosed above such as zinc-neutralized ionomer. An ethylene alkyl (meth)acrylate copolymer such as ethylene methyl acrylate copolymer or ethylene butyl acrylate copolymer is well known to one skilled in the art such as the commercially available ELVALOY® from DuPont.

Other tie layer may include ethylene polymer (e.g., low density polyethylene, linear low density polyethylene, metallocene catalyst-produced polyethylene), an ionomer disclosed above, ethylene vinyl acetate copolymer, polyester, or combinations of two or more thereof.

The at least one tie layer may have a thickness varying from 2 to 50 µm, 5 up to 50 µm, 15 to 25 µm, or about 20 µm.

The adhesive layer may be adjacent to the barrier layer or adhere the multilayer film to an at least one layer of insulating material, building material, or combinations thereof.

Preferably, the film or sheet forming the container is obtained by blown (co)extrusion, cast film mono/co-extrusion or extrusion coating.

Most preferably, the film or sheet forming the container is obtained by blown film mono/co-extrusion.

The film or sheet can be further processed into articles disclosed below with uniaxial or biaxial stretching, axial heat sealing, thermoforming, vacuum forming, sheet folding, heat sealing, compression molding, or combinations of two or more thereof.

For example, a multilayer structure can be produced by a process including extrusion coating or lamination, blown mono/co-extrusion, cast film mono/co-extrusion or sheet mono/co-extrusion and mono/co-extrusion coating, lamination or any suitable method known in the art. A blown film can be prepared by extruding a polymeric composition through an annular die and expanding the resulting tubular film with an air current to provide a blown film. Cast flat films can be prepared by extruding the composition through a flat die. The film leaving the die is cooled by at least one roll containing internally circulating fluid (a chill roll) or by a water bath to provide a cast film. Extrusion coating or lamination can involve laying down a molten curtain of a sealant composition on a moving barrier layer (e.g., 15.24 - 304.8 meters (50 to 1000 feet) per minute) in which the melt curtain can be formed by extruding the sealant composition through a flat die. Because such film
making methods are well known to one skilled in the art, the description of which is omitted for the interest of brevity.

Various additives can be present in the respective film layers including a tie layer. The additives can be one or more antioxidants, thermal stabilizers, ultraviolet (UV) light stabilizers, pigments and dyes, fillers, delustrants, anti-slip agents, plasticizers, anti-block agents, and other processing aids.

A film can be further oriented beyond the immediate quenching or casting of the film. Orientation and stretching apparatus to uniaxially or biaxially stretch film are known in the art and may be adapted by those skilled in the art to produce films of the present invention. Examples of such apparatus and processes include, for example, those disclosed in US patents 3278663, 3337665, 3456044, 4590106, 4760116, 4769421, 4797235, and 4886634.

The multilayer structure may be different in structure (e.g., one layer can be clear and the other can be opaque).

The container can be produced from the film or sheet, for example, by folding back the film or sheet on itself, where the sealant layer is against itself,
along essentially the superimposed edges directly (or indirectly through an intervening tie layer or adhesive layer) thereby defining a sealed perimeter and forming a container such as a pouch. One side of the container can be left open and sealed only after one or more PCMs are enclosed in the container thereby forming a sealed container containing PCM(s) or a matrix containing the PCM(s). The seal strength of the sealed perimeter is sufficient to withstand manual compression of the PCM.

Because the sealant layer is made from heat-sealable polymer(s), the container can be self-sealed under the heat without an intervening tie layer.

Sheet can also be made with the PCM or PCM blend where such sheet can have a thickness of 0.5 and 10 mm and can be manufactured either directly by melt blend extrusion as known to one skilled in the art or by preparing the PCM (or blend) which is subsequently processed by means of any conventional technology such as extrusion, calendering and hot lamination. The sheet includes a multilayer structure.

A PCM can also be shaped into sheets and laminated on both sides with the film or sheet, the heat-sealable copolymer side being in direct contact with the PCM. The lateral edges of the multilayer film can be sealed to each other. The edges may comprise or consist of multilayer film overhanging the lateral sides of the PCM sheet in the case where the dimensions of the multilayer film exceed the ones of the PCM sheet. In the case where the multilayer film and PCM sheet have the same dimensions, the edges consist of a multilayer film and PCM.

Heat sealing of the lateral edges can be achieved through heated pliers or rolls pinching down from both sides of the laminated PCM sheet, thereby contacting the at least one heat-sealable copolymer of both multilayer films under heat and pressure.

After sealing the lateral edges, the laminated PCM sheet can subsequently be sealed and cut transversally to yield rectangular laminated PCM sheets that are now completely encapsulated within the multilayer film.

The container can also be produced from different films or sheets, for example, by sealing the sealant layer of the films or sheets or indirectly through another intervening tie layer or adhesive layer thereby defining a sealed perimeter and forming a container such as a pouch.

Alternatively, manufacturing a film or sheet where the heat-sealable copolymer is not a continuous layer of copolymer, but where instead the heat-sealable copolymer may be only a strip or closed outline defining the parts of the film where a seal is to be formed. For example, two different films or sheets can be sealed together using any one of the adhesives disclosed herein. Using two polyamide films or sheets as example, they can be made into a pouch by using a heat sealable adhesive such as an ionomer disclosed above or an ethylene alkyl (meth)acrylate copolymer along the edges and then heat-sealed.

Other adhesives can be used. The invention may enable the manufacture of thermal insulation units, even when the heat-sealable copolymers of the multilayer film are contaminated with PCM. In addition to lamination, the PCM sheets can be co-extruded together with the multilayer films forming the pouch.

The shape of the PCM sheets and, concordantly, the shape of the thermal insulation unit, are completely adjustable to the geometric constraints of the desired application, and can be even complex shapes otherwise unrealizable using conventional techniques. Examples include, but are not limited to, polygons, ovals and circles, depending on the shape needed and depending on where pressure and heat are applied.

The PCM sheet can also be placed on a single multilayer film, which can be folded over the PCM sheet such that only three of the edges of the multilayer film need to be heat sealed to form the thermal insulation unit.

The thermal insulation unit can further comprise at least one additional layer of insulating and/or construction material layer. The thermal insulation unit may be adhered to the at least one additional insulating and/or construction material layer by at least one layer of adhesive.

The at least one additional insulating layer may be any suitable insulating material layer used in construction, textile or automotive application. Examples include, but are not restricted to, expanded polystyrene foam (EPS), mineral wool, foamed polyurethane, vermiculite, fiber-cement board, plaster walls, compressed wheat straw, foamed epoxy, drywall, wood based insulting materials, blankets, loose-fill, or rigid systems with materials such as rock wool, fiber glass, cellulose, polyurethane foam, extruded polystyrene foam, polyurethane foam, polyisocyanurate foam, or combinations of two or more thereof.

In the case where the additional insulating layer is expanded polystyrene foam, an adhesive layer may be either an anhydride-modified ethylene vinyl acetate or ionomer such as an anhydride modified ethylene vinyl acetate having a vinyl acetate content of about 25.5 wt % and a maleic anhydride content of about 0.11 wt %; or a sodium ionomer having a neutralization level of 54%, a methacrylic acid content of 10 wt %.

The at least one layer of adhesive is then heated by heated pliers or rolls while being pressed against the at least one additional insulating and/or construction material layer.

Alternatively, the thermal insulation unit can be affixed by any other suitable means to the at least one additional insulating and/or construction material layer, such as for example, nailing, stapling, adhesive taping and gluing.

The at least one additional layer may be any suitable material for interior or exterior application, prefabricated or non-prefabricated. This includes gypsum fiberboards, cement fiberboards, cement wallboards, plasterboards, bricks, concrete, drywall, wood, metal, glass, and polymer-based materials. Drywall is typically made of a gypsum or plaster core sandwiched or faced in paper or cardboard and is produced as sheets which may be fastened to wall frames with nails or screws.

Also provided is an article for sport and/or outdoor activities where the article includes a thermal insulation unit. The article may be chosen among clothes, shoes, gloves, socks, sleeping bags, tents, food containers, beverage containers, others, or combinations of two or more thereof.

The thickness and the shape of the thermal insulation unit comprised in the article may be adjusted according to the needs of the sport and/or outdoor application. For example, a thermal insulation layer can be 0.0001 to 10 cm thick and up to many meters long.

The article may be used for personal protection such as ballistic vests, firefighter equipment, and insulating garments. The thickness and the shape of the thermal insulation unit comprised in the article may be adjusted according to the needs of the personal protection application.

### EXAMPLES

### Example 1 PCM-polymer blend

60 g of paraffin commercially available from Rubitherm under the trade name RUBITHERM® RT21 (melting point 21°C) and 40 g of granules of VLDPE (density 0.863 g/cm³) grafted with 0.5 wt% of maleic anhydride, were simultaneously introduced into a 1-liter tumble blender. Blending was carried out during eight (8) hours at 25°C to enable sufficient time for maximal incorporation of the liquid paraffin into the polymer matrix (soaking).

The granules soaked with the paraffin were taken out of the blender.

The difference in the granules weight before and after soaking was measured, thus allowing to calculate the weight percentage of paraffin absorbed by the polymer matrix.

### Example 2 Multilayer film M1 for forming a pouch

A tubular multilayer film M1 was manufactured by blown film extrusion, having, from inside to outside, (1) a 20 µm layer of an anhydride-modified ethylene vinyl acetate having a vinyl acetate content of 25.5 wt % and a maleic anhydride content of 0.11 wt %, (2) a 50 µm layer of nylon6,12, (3) a 20 µm layer zinc ionomer derived from ethylene methacrylic acid copolymer having a neutralization level of 38% and 12 wt% methacrylic acid, and (4) a 30 µm layer of sodium ionomer derived from ethylene methacrylic acid copolymer having a neutralization level of 54 % and 10 wt% methacrylic acid. The expansion ratio between die and blown tube of film was 3.28.

### Multilayer film M2 for forming a pouch

A tubular multilayer film M2 was manufactured by blown film extrusion, having, from inside to outside, (1) a 30 µm layer of sodium ionomer derived from ethylene methacrylic acid copolymer having a neutralization level of 54 % and 10wt% methacrylic acid, (2) a 20 µm layer of zinc ionomer derived from ethylene methacrylic acid copolymer having a neutralization level of 58 % and 15wt% methacrylic acid, and (3) a 50 µm layer of nylon 6,12. The expansion ratio between die and blown tube of film was 3.28.

### Example 3

A first metal board (steel) having dimensions of 200x200x3mm was inserted into the bottom part of a heat press. A sheet of PTFE (polytetrafluoroethylene) having 200 µm in thickness was laid on top of the first metal board (to prevent it from sticking to the metal). A second metal board (steel) having the dimensions 200x200x5 mm and having a central window the size of 150x150mm was laid on top of the PTFE sheet. The cavity created by the window of the metal board was filled with PCM-polymer blend and a second sheet of PTFE (200 µm) was laid on top of the second metal board. Subsequently, a third metal board (steel) was laid on top of the PTFE sheet. The resulting multilayered stack was then heat pressed by pre-heating for 1 minute at a temperature of 110°C, no pressure; heating for 1 minute at a temperature of 110°C at a pressure of 5 bars; heating for 2 minutes at a temperature of 110°C at a pressure of 50 bars; and cooling to a temperature of 10°C at a pressure of 50 bars.

PTFE was used to prevent the PCM polymer blend from sticking to the metal and was removed from the slab afterwards.

The resulting PCM polymer blend slab having the size of 150x150x5 mm was then placed between two multilayer films manufactured according to the above description (M1 and M2), the ionomer layer of both multilayer films being in direct contact with the PCM polymer slab.

The two multilayer films were then pressed into close contact with the PCM polymer blend slab to prevent air cavities between multilayer film and PCM polymer blend slab by applying pressure on the external side of the multilayer films with a metallic roll or board.

The edges of the two multilayer films were then sealed to each other by thermal impulse sealing for 2 seconds at a temperature of 160°C followed by cooling to 60°C to form a pouch.

### Example 4 Seal strength measurements

The sample film strips for seal strength testing were film strips of 15 mm width, cut from prepared blown films in machine direction.
Sample 1 was a film strip made of a zinc ionomer derived from ethylene methacrylic acid copolymer having a neutralization level of 23 % and 15 wt% methacrylic acid.
Sample 2 was a film strip made of a random polypropylene copolymer.
Sample 3 was a film strip made of a LLDPE.
Sample 4 was a film strip made of a LDPE.

The samples were then heat-sealed on a Kopp Heat Sealer, with two flat PTFE-coated, internally heated heating bars using cartridge-type electric heaters. Each sample was sealed on itself at a pressure of 0.3 MPa, a temperature of 160 °C and a dwell time of 1 second (s). To avoid sticking of polymer to the heated bar, a polyester film covered each sample. To compare the effect of paraffin contamination on seal strength, each sample was also sealed to itself according to the above description, but with 50 g/m² of paraffin (RUBITHERM® RT21), spread evenly across the surface to be sealed.

Peel strength test. Strength of the prepared seals was measured after conditioning at 23°C and 50% relative humidity for 24 h. The samples were then placed in the Zwick jaw clamps. The peel strength was measured on a Zwick 1435 Tensile Tester at a pulling speed set to 100 mm/min and having a peel angle of 90°. The values presented are given in N/15mm and are an average of at least three measurements.

Table 1 shows seal strength values for different polymer films sealed to themselves. For each polymer film, the table shows the seal strength value for a paraffin contaminated seal and an uncontaminated seal. Sample 2, 3, and 4 were comparative examples.

**Table 1. Seal strength values of samples 1, 2, 3, and 4**

| Sample | 1 | | 2 | | 3 | | 4 | |
|---|---|---|---|---|---|---|---|---|
| Seal Strength (N/15mm) | 22.75^{A} | 22^{B} | 20.2^{A} | 10.1**^{B}** | 11.2^{A} | 9.8^{B} | 13.5^{A} | 7.4^{B} |
| ^{A} Uncontaminated; ^{B} Contaminated with paraffin. | | | | | | | | |

Table 1 shows that the seal strength values of comparative examples 2, 3, and 4 decreased by up to 50% when contaminated with paraffin. In contrast, the seal strength value of sample 1 was nearly constant, irrespective of paraffin contamination. For this reason, ionomers, which were unaffected by paraffin contamination, are suitable to be used as sealant layers in the multilayer films for forming pouches.

### Example 5 Barrier measurements

Sample 1 was a 50 µm thick film made of a zinc ionomer having a neutralization level of 23 %, a methacrylic acid content of 15 wt %.
Sample 2 was a 25 µm thick aluminum metalized film made of a zinc ionomer having a neutralization level of 23 %, a methacrylic acid content of 15 wt % where the metallization thickness is about 1 µm.
Sample 3 was an 18 µm thick film made of biaxially oriented met-polypropylene.
Sample 4 was a 50 µm thick film made of nylon 6,12 copolyamide.
Sample 5 was a 50 µm thick film made of nylon 6.
Sample 6 was a 24 µm thick film made of biaxially oriented PET.
Sample 7 was a 25 µm thick film made of oriented nylon 6,6.

Film samples 1-7 were cut into circular pads having a diameter of about 7.5 cm. Each circular pad was then fixed to the open end of a cylindrical Albert cup (Model 68 by Thwing-Albert, diameter 63.5 mm) containing 75 g of paraffin (RUBITHERM® RT21).

The cylindrical Albert cups were then weighted and the weights recorded for later comparison.

The cylindrical Albert cups were then placed upside-down, so that the sample film was at the lower end and the paraffin rested on top of it.

The cylindrical Albert cups were then placed in an oven at 60°C for 1 month. The cylindrical Albert cups were then weighted and the weight recorded. The loss of paraffin corresponds to the difference in weight between the beginning of measurements and after removal from the oven and is expressed in grams/square meter x day. Results are normalized to a film thickness of 50 µm to be comparable directly to each other. Results are shown in Table 2.

**Table 2. Paraffin permeability of samples 1-7**

| | 1 | 2 | 3 | 4 | 5 | 6 | 7 |
|---|---|---|---|---|---|---|---|
| Loss of paraffin (in gr/m2xday) | 17 | 11 | 6.7 | 0.47 | 0.22 | 0.2 | 0.11 |

Table 2 shows the paraffin permeability values of samples 1-7. Films having a paraffin permeability value of less than 1 g/m²xday were suitable as barrier layers for the multilayer forming pouch.

## Claims

1. An article comprising a container and a phase change material wherein
the container includes a pouch or a bag;
the container has contained therein at least one phase change material;
the container comprises or is produced from a film or sheet;
the film or sheet includes a multilayer structure comprising at least one sealant layer and at least one barrier layer;
the sealant layer includes copolymer of ethylene (meth)acrylic acid, ionomer derived from copolymer of ethylene (meth)acrylic acid, or combinations thereof;
the barrier layer includes ethylene vinyl alcohol copolymer, polyamide, polyester, polyvinylidene chloride, polycarbonate, or combinations of two or more thereof; and wherein the phase change material is a polymer matrix containing paraffin or is paraffin.

2. The article of claim 1 wherein the film or sheet is permeable to the phase change material at less than 0.2 g/m²/24 hr.

3. The article of claim 2 wherein the multilayer structure is permeable to the phase change material at less than 0.3 g/m²/24 hr; preferably at less than 0.5 g/m²/24 hr.

4. The article of claim 1, 2 or 3 wherein the sealant layer is the ionomer; the barrier layer is polyamide; and the container is preferably a pouch.

5. A thermal insulation unit comprising at least one insulation layer and at least one article wherein
the insulation layer includes expanded polystyrene foam, mineral wool, foamed polyurethane, vermiculite, fiber-cement board, plaster walls, compressed wheat straw, foamed epoxy, drywall, wood based insulating materials, blankets, loose-fill, or rigid systems with materials such as rock wool, fiber glass, cellulose, polyurethane foam, extruded polystyrene foam, polyurethane foam, polyisocyanurate foam, or combinations of two or more thereof; and
the article is as **characterized in** claim 1, 2, 3 or 4 .

6. The thermal insulation unit of claim 5 wherein the (meth)acrylic acid is partially or completely neutralized with Zn ions and the insulation layer is the expanded polystyrene foam.

7. The thermal insulation unit of claim 5 or 6 wherein the article is a pouch.

8. The thermal insulation unit of claim 5, 6 or 7 wherein the article comprises at least one additional insulating layer positioned adjacent to the container or to the insulation layer.

9. Use of a thermal unit for sport activities, outdoor activities, or personal protection wherein the thermal insulation unit is as **characterized in** claim 5, 6 or 7.

## Patentansprüche

1. Artikel umfassend einen Behälter und ein Phasenwechselmaterial, wobei
der Behälter einen Beutel oder einen Sack umfasst;
der Behälter mindestens ein Phasenwechselmaterial darin enthält;
der Behälter eine Folie oder Platte umfasst oder daraus hergestellt ist;
die Folie oder Platte ein Mehrschichtgebilde umfasst, das mindestens eine Dichtungsmaterialschicht und mindestens eine Barriereschicht umfasst;
die Dichtungsmaterialschicht Copolymer von Ethylen(meth)acrylsäure, von Copolymer von Ethylen(meth)acrylsäure abgeleitetes Ionomer oder Kombinationen davon umfasst;
die Barriereschicht Ethylenvinylalkoholcopolymer, Polyamid, Polyester, Polyvinylidenchlorid, Polycarbonat oder Kombinationen von zwei oder mehreren davon umfasst; und wobei das Phasenwechselmaterial eine Polymermatrix ist, die Paraffin enthält oder Paraffin ist.

2. Artikel nach Anspruch 1, wobei die Folie oder Platte für das Phasenwechselmaterial weniger als 0,2 g/m²/24 h durchlässig ist.

3. Artikel nach Anspruch 2, wobei das Mehrschichtgebilde für das Phasenwechselmaterial weniger als 0,3 g/m²/24 h, bevorzugt weniger als 0,5 g/m²/24 h durchlässig ist.

4. Artikel nach Anspruch 1, 2 oder 3, wobei die Dichtungsmaterialschicht das Ionomer ist, die Barriereschicht Polyamid ist und der Behälter bevorzugt ein Beutel ist.

5. Wärmedämmungseinheit umfassend mindestens eine Dämmschicht und mindestens einen Artikel, wobei
die Dämmschicht expandiertes Schaumpolystyrol, Mineralwolle, geschäumtes Polyurethan, Vermiculit, Faserzementplatte, Putzwände, komprimiertes Weizenstroh, geschäumtes Epoxid, Trockenbauwand, Dämmmaterialien auf der Basis von Holz, wärmedämmende Matten, schüttfähiges Füllmaterial oder steife Systeme mit Materialien wie Steinwolle, Fiberglas, Cellulose, Polyurethanschaum, extrudiertem Polystyrolschaum, Polyurethanschaum, Polyisocyanuratschaum oder Kombinationen von zwei oder mehreren davon umfasst; und
der Artikel wie in Anspruch 1, 2, 3 oder 4 angegeben gekennzeichnet ist.

6. Wärmedämmungseinheit nach Anspruch 5, wobei die (Meth)acrylsäure teilweise oder vollständig mit Zn-Ionen neutralisiert ist und die Dämmschicht das expandierte Schaumpolystyrol ist.

7. Wärmedämmungseinheit nach Anspruch 5 oder 6, wobei der Artikel ein Beutel ist.

8. Wärmedämmungseinheit nach Anspruch 5, 6 oder 7, wobei der Artikel mindestens eine zusätzliche Dämmschicht umfasst, die an den Behälter oder die Dämmschicht anliegend positioniert ist.

9. Verwendung einer Wärmeeinheit für Sportaktivitäten, Aktivitäten im Freien oder persönlichen Schutz, wobei die Wärmedämmungseinheit wie in Anspruch 5, 6 oder 7 angegeben gekennzeichnet ist.

## Revendications

1. Article comprenant un conteneur et un matériau à changement de phase, dans lequel
le conteneur comprend une poche ou un sac;
le conteneur présente contenu à l'intérieur au moins un matériau à changement de phase;
le conteneur comprend ou est produit à partir d'un film ou d'une feuille;
le film ou la feuille comprend une structure multicouche comprenant au moins une couche d'étanchéité et au moins une couche formant barrière;
la couche d'étanchéité comprend le copolymère d'éthylène-acide (méth)acrylique, l'ionomère dérivé du copolymère d'éthylène-acide (méth)acrylique, ou des combinaisons de ceux-ci;
la couche formant barrière comprend un copolymère d'éthylène-alcool de vinyle, du polyamide, du polyester, du poly(chlorure de vinylidène), du polycarbonate, ou des combinaisons de deux ou plusieurs d'entre eux; et où le matériau à changement de phase est une matrice polymère contenant de la paraffine ou est de la paraffine.

2. Article selon la revendication 1, dans lequel le film ou la feuille est perméable au matériau à changement de phase à moins de 0,2 g/m²/24 h.

3. Article selon la revendication 2, dans lequel la structure multicouche est perméable au matériau à changement de phase à moins de 0,3 g/m²/24 h; préférablement à moins de 0,5 g/m²/24 h.

4. Article selon la revendication 1, 2 ou 3, dans lequel la couche d'étanchéité est l'ionomère; la couche formant barrière est le polyamide; et le conteneur est préférablement une poche.

5. Unité d'isolation thermique comprenant au moins une couche d'isolation et au moins un article, où
la couche d'isolation comprend une mousse de polystyrène expansée, de la laine minérale, du polyuréthane expansé, de la vermiculite, un panneau de fibro-ciment, des parois en plâtre, de la paille de blé comprimée, de l'époxy expansé, une paroi sèche, des matériaux isolants à base de bois, des couvertures, des systèmes à remplissage lâches, ou rigides avec des matériaux tels que la laine de roche, la fibre de verre, la cellulose, la mousse de polyuréthane, la mousse de polystyrène extrudée, la mousse de polyuréthane, la mousse de polyisocyanurate, ou des combinaisons de deux ou plusieurs d'entre elles; et
l'article est tel que caractérisé selon la revendication 1, 2, 3 ou 4.

6. Unité d'isolation thermique selon la revendication 5, dans laquelle l'acide (méth)acrylique est partiellement ou entièrement neutralisé avec des ions Zn et la couche d'isolation est la mousse de polystyrène expansée.

7. Unité d'isolation thermique selon la revendication 5 ou 6, dans laquelle l'article est une poche.

8. Unité d'isolation thermique selon la revendication 5, 6 ou 7, dans laquelle l'article comprend au moins une couche d'isolation additionnelle positionnée de manière adjacente au conteneur ou à la couche d'isolation.

9. Utilisation d'une unité thermique pour les activités sportives, les activités d'extérieur, ou la protection individuelle, où l'unité d'isolation thermique est telle que **caractérisée** selon la revendication 5, 6 ou 7.
